# EUROPEAN PATENT APPLICATION

(11) **EP 4 834 666 A1**
(43) Date of publication of application: **04.11.2026**
(21) Application number: 25172974.5
(22) Date of filing: 28.04.2025
(51) Int. Cl.: B60R 19/52, B60R 21/34

(54) **AN ENERGY ABSORPTION DEVICE**

(71) Applicant: Volvo Truck Corporation, 405 08 Göteborg (SE)
(72) Inventor: SHAH, Bhumika, 560075 Bangalore Karnataka (IN); VENKITACHALAM, Muthukumar, 695014 Thiruvananthapuram Kerala (IN); RAJAGOPAL, Sudhan, 560016 Ramamurthy Nagar, Bengaluru, Karnataka (IN)
(74) Representative: Germain Maureau

(57) **Abstract**

The invention relates to an energy absorption device (30) intended to be disposed in a front portion of a vehicle (1) rearward of a front grille (22) thereof, the energy absorption device (30) comprising:
- a rigid structure (33) intended to be secured to the front grille (22) ;
- a flexible member (34) secured to the rigid structure (33) and intended to be disposed in front of a functional front crosspiece (12) of the vehicle (1).

## Description

### TECHNICAL FIELD

The disclosure relates generally to an energy absorption device mounted in a front portion of a vehicle. In particular aspects, the disclosure relates to an energy absorption device ensuring pedestrian protection in the event of a collision of the pedestrian with a vehicle. The disclosure can be applied in heavy-duty vehicles, such as trucks, buses, and construction equipment. Although the disclosure may be described with respect to a truck, the disclosure is not restricted to any particular vehicle.

### BACKGROUND

Motor vehicles, such as trucks, often include a front grille covering an opening in a front part of the motor vehicle. This opening allows air to enter and flow past one or more heat exchangers (e.g., a radiator) of the motor vehicle for cooling purposes. The front grille typically covers the opening to protect the engine and other automotive components located under a front hood assembly, while still allowing air to enter the front hood assembly. In some motor vehicles, the front grille may additionally or solely serve a decorative purpose.

Traditionally, the front grille is rigidly mounted to the front hood assembly, for example by screws or other fasteners. Therefore, in the event of a frontal collision with a pedestrian, in which the pedestrian is hit by the front grille of the vehicle, the pedestrian may experience major injuries even at low vehicle speeds.

To improve pedestrian protection, modern motor vehicles may include an impact protection structure provided on the front grille of the vehicles. The impact protection structure is configured to absorb a majority of impact energy early in the impact. Such an impact protection structure generally includes energy absorption components that are capable of collapsing or breaking in the event of impact. These energy absorption components may be positioned between the front grille and a functional front crosspiece of the vehicle that is in front of the engine block. The function of the functional front crosspiece is to support various components, mainly the engine block radiator.

Furthermore, modern motor vehicles may include air guide that is typically integrated with and positioned in front of the functional front crosspiece. The air guide functions to introduce outside air towards the radiator, while limiting recirculation of hot air from the engine compartment. A typical air guide is relatively stiff.

Thus, the presence of such a rigid air guide in the vehicle can significantly reduce the effects of an impact protection structure on pedestrian protection due to the fact that, in the event of a collision with a pedestrian, the air guide will not collapse and may seriously injure the pedestrian.

The invention aims to overcome these drawbacks by proposing an energy absorption device that can overcome challenges associated with conventional impact protection structures.

### SUMMARY

According to a first aspect of the disclosure, the disclosure relates to an energy absorption device intended to be disposed in a front portion of a vehicle rearward of a front grille thereof, the energy absorption device comprising:
- a rigid structure intended to be secured to the front grille ;
- a flexible member secured to the rigid structure and intended to be disposed in front of a functional front crosspiece of the vehicle.

Thus configured, the disclosure makes it possible to propose a device that can act as both an impact absorber and an air guide.

In some examples, the flexible member is made of a foam material including an expandable polypropylene material.

In some examples, the flexible member is intended to be in contact with the functional front crosspiece of the vehicle.

In some examples, the flexible member is configured to form a seal between the functional front crosspiece of the vehicle and the front grille thereof.

In some examples, the flexible member is provided with a lip member, which is intended to come in contact with the functional front crosspiece and which is capable of locally deforming to form a tight seal that prevents a cooling air to circulate laterally.

In some examples, the flexible member has an outer periphery that is intended to partially surround a ventilation opening in the functional front crosspiece of the vehicle.

In some examples, the flexible member comprises at least one connecting lug that is slottingly engaged into a corresponding slot formed in the rigid structure, thus connecting the flexible member to the rigid structure, said slot extending along a connecting line that is laterally offset from a connecting element securing the rigid structure to the front grille of the vehicle, thus allowing a bending movement of the flexible member relative to the rigid structure when a force directed towards the rear of the vehicle is applied on the connecting element.

In some examples, the flexible member has a stepped profile comprising at least three parallelepiped portions having different volumes, respectively a first portion having a first volume, a second portion having a second volume, said second volume being lower than the first volume, and a third portion having a third volume, said third volume being lower than the second volume.

In some examples, the first portion has a first length along a longitudinal direction and a first width along a lateral direction, the second portion has a second length along a longitudinal direction and a second width along a lateral direction, and the third portion has a third length along a longitudinal direction and a third width along a lateral direction, said first, second and third lengths and widths being defined such that the ratio between the first width and the sum of the first, second and third lengths is less than 0.3, and/or the ratio between the second width and the sum of the first, second and third lengths is less than 0.15, and/or the ratio between the sum of the first, second and third lengths and the distance along a longitudinal direction between the functional front crosspiece of the vehicle and the front grille thereof is greater than 0.7.

According to a second aspect of the disclosure, the disclosure relates to a vehicle comprising a functional front crosspiece, a front grille and an energy absorption device as above defined disposed between the functional front crosspiece and the front grille.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a side view of a vehicle in accordance with one exemplary embodiment of the invention.
**FIG. 2** is an exploded perspective view of a front portion of the vehicle illustrated in **FIG.1****.**
**FIG. 3** is a perspective view of an energy absorption device, in accordance with one exemplary embodiment of the invention.
**FIG. 4** is a perspective view of a functional front crosspiece of a vehicle contacting at its both lateral ends an energy absorption device embodied as in **FIG. 3****.**
**FIG. 5** is a perspective view of a flexible member that forms a part of the energy absorption device of **FIG.3****.**
**FIG. 6** is an enlarged view of the energy absorption device of **FIG.3** when mounted at the front of the vehicle of **FIG. 1****.**
**FIG. 7a** is a view identical to **FIG. 6** showing specific dimensional features of the energy absorption device.
**FIG. 7b** is an enlarged view of a detail illustrated in **FIG. 7a****.**

### DETAILED DESCRIPTION

Aspects set forth below represent the necessary information to enable those skilled in the art to practice the disclosure.

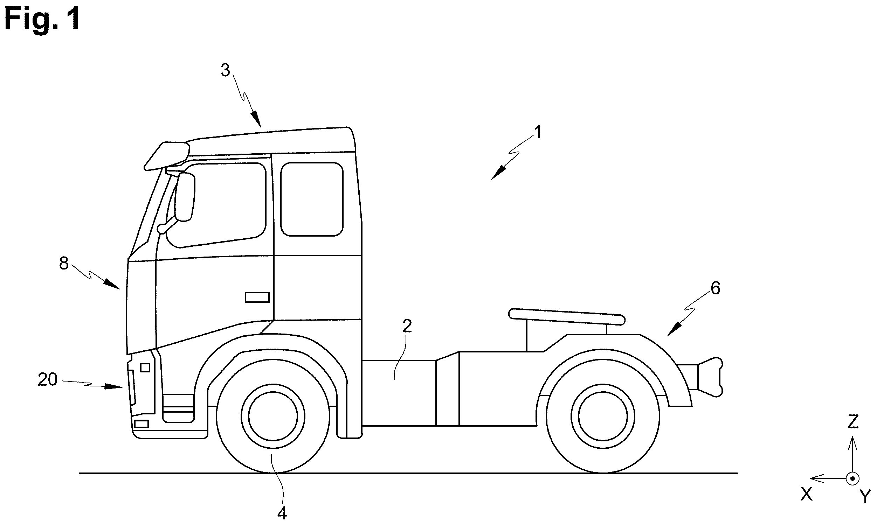

**FIG. 1** illustrates a vehicle 1, in accordance with at least one exemplary embodiment of the invention. Although the vehicle 1 is illustrated in the form of a truck, other types of vehicles, such as buses, construction equipment, trailers or passenger cars may be provided in accordance with the invention.

It is defined with respect to vehicle 1 an orthogonal reference frame XYZ comprising three axes perpendicular two by two, namely:
- an X axis, defining a longitudinal, horizontal direction, coincident with the general direction of movement of the vehicle,
- a Y axis, defining a lateral, horizontal direction, which defines a horizontal XY plane with the X axis,
- a Z axis, defining a vertical direction, perpendicular to the horizontal XY plane.

In the remainder of the description and with reference to the reference defined above, the terms "longitudinal" or "longitudinally" refer to a direction coincident with the X axis, the terms "lateral " or "laterally" refer to a direction coincident with the Y axis, and the terms "vertical" or "vertically" refer to a direction coincident with the Z axis.

The vehicle 1 comprises a chassis 2 supporting a cab 3 in which a driver may operate the vehicle 1. The vehicle 1 comprises a number of road wheels 4, herein illustrated as two pairs of wheels, however in other embodiments there may be a different number of wheels, such as three pairs, four pairs or more.

The vehicle 1 comprises a rear end 6, a front end 8 located forwardly of the rear end 6, wherein a direction extending from the rear end 6 towards the front end 8 or vice versa is defined as a longitudinal direction of the vehicle and a direction extending perpendicular to a longitudinal direction and parallel to the ground is defined as a lateral direction. The chassis 2 extends between the rear end 6 and the front end 8. An impact protection structure 20 located underneath the cab 3 is mounted on the chassis 10. The role of the impact protection structure 20 is to ensure the safety of a pedestrian potentially hit by the vehicle 1 during a collision, by absorbing an impact from the front of the vehicle 1. The impact absorption structure 20 is adapted to deform easily and absorb part of the energy generated during a pedestrian impact.

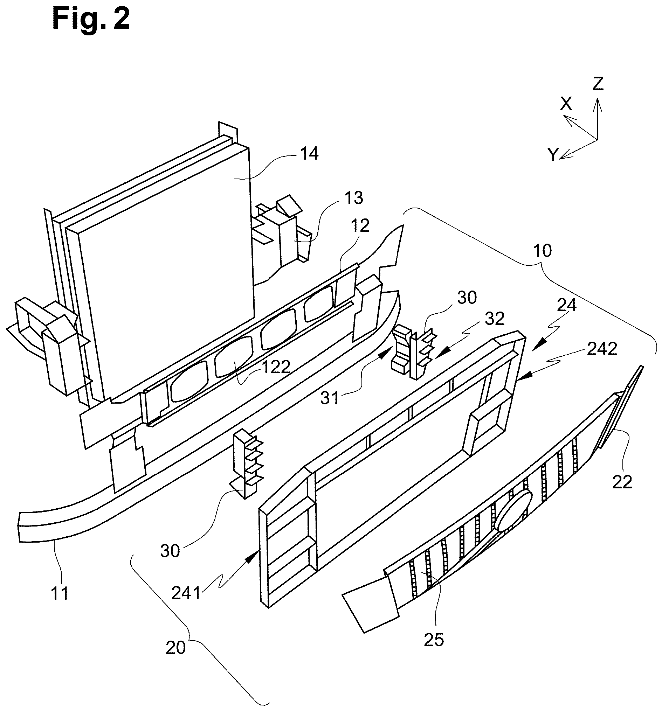

**FIG. 2** is a exploded perspective view of a front portion of the vehicle 1 illustrated in **FIG. 1****,** which may be provided with an impact protection structure 20, in accordance with at least one exemplary embodiment. Suitably, the impact protection structure 20 is located forwardly of a functional front crosspiece 12 supported by a front under-run protector 11, the impact protection structure 20, the front under-run protector 11 and the functional front crosspiece 12 being included in a front module 10. The front module 10 may connected to a chassis 13 to be positioned forward of a radiator 14, an air conditioning condenser, an electric fan, and/or a motor.

The impact protection structure 20 comprises a front grille 22 mounted on a front-end crosspiece 24 extending along a lateral direction from a left end 241 towards a right end 242. The front grille 22 is provided a plurality of small openings, said small openings allowing air to pass through the front grille 22 and through ventilation openings 122 formed in the functional front crosspiece 12 to cool the parts located behind the front module 10. The front grille 22 protects the parts located behind the front grille 22 from an impact with a foreign body. The front grille 22 comprises a plurality of slats 25, which can be straight and/or crossed to form a mesh. These slats 25 allow the passage of air, while allowing the blocking of physical elements that cannot pass through the mesh.

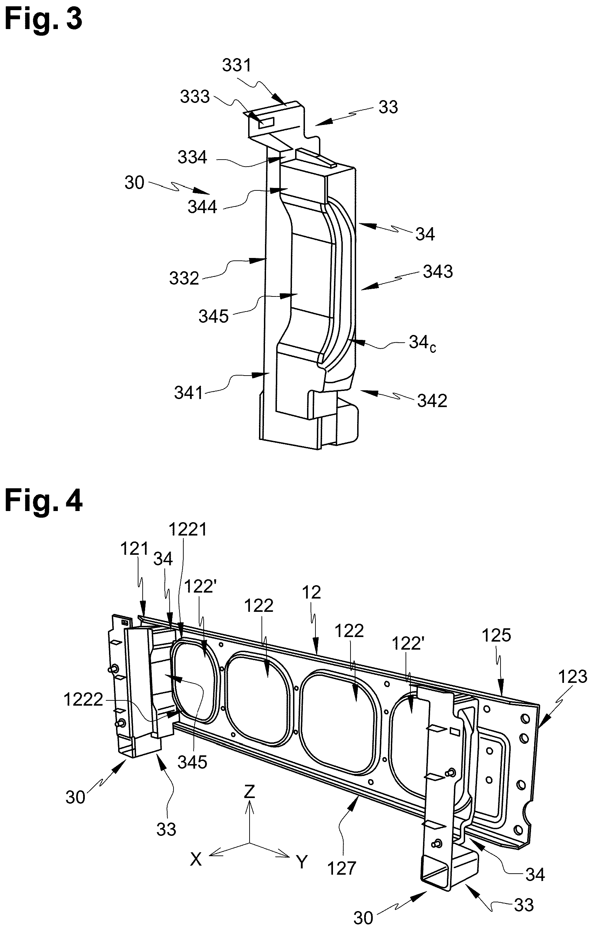

The front-end crosspiece 24 supports at each of its left and right ends 241, 242 an energy absorption device 30, which will be described in detail in more detail in connection with **FIG. 3****.** Each energy absorption device 30 extends longitudinally from a rear end 31, which is in contact with the functional front crosspiece 12, towards to a front end 32, which is fixedly connected to the front-end crosspiece 24. As better explained in the following description, the energy absorption device 30 are configured to both absorb kinetic energy in the event of a collision with a pedestrian and efficiently channel an air flow to cool a radiator arranged rearward to the functional front crosspiece 12.

As illustrated in **FIG. 3****,** each energy absorption device 30 comprises two main components, respectively a rigid structure 33 intended to be secured to the front grille 22 and a flexible member 34 secured to the rigid structure 33 and intended to be disposed in front of the functional front crosspiece 12 of the vehicle 1.

The rigid structure 33 comprises a first panel 331 extending in a lateral direction and a second panel 332 extending in a longitudinal direction. The first panel 331 includes a plurality of holes 333 allowing the insertion of fixing means to secure the rigid structure 33 to one of the left and right ends 241, 242 of the front-end crosspiece 24. The fixing means may for example be rivets.

In one embodiment, the rigid structure 33 may advantageously be composed of a relatively rigid plastic in order to fix the energy absorption device 30 to the front-end crosspiece 24 in a dimensionally and positionally stable manner.

The second panel 332 includes a rear leg 334 extending parallel to the first panel 331 at its end that faces away from the front of the vehicle. The rear leg 334 supports the flexible member 34. The rear leg 334 may advantageously be provided with fastening means adapted to connect the flexible member 34 to the rigid structure 33 in a dimensionally and positionally unstable manner. In particular, the fastening means may advantageously allow a bending movement of the flexible member 34 relative to the rigid structure 33 about a longitudinal axis.

The flexible member 34 has a substantially parallelepiped shape and comprises a front face 341 facing the first panel 331 of the rigid structure 33 and a rear face 342 facing the functional front crosspiece 12. Each of the front and rear faces 341, 342 extends between a first side face 343 and a second side face 344. One of the first and second side faces 343, 344 may advantageously be provided with a cavity 345. This cavity 345 may advantageously have a complementary shape to the shape of a ventilation opening 122 of the functional front crosspiece 12. Thus, when the energy absorption device 30 is conveniently positioned relative to the functional front crosspiece 12 so that its flexible member 34 borders one ventilation opening 122, as illustrated in **FIG. 4****,** its outer periphery partially surround this ventilation opening 122, thus allowing that the cooling air circulating towards the functional front crosspiece 12 is optimally directed towards the ventilation opening 122. The flexible member 34 is advantageously provided with a lip member 34c, which comes in contact with the functional front crosspiece 12 and which is capable of locally deforming to form a tight seal that prevents the cooling air to circulate laterally.

In the embodiment shown in **FIG. 4****,** the functional front crosspiece 12 has a rectangular shape and extends laterally between a left edge 121 and a right edge 123 and vertically between an upper edge 125 and a lower edge 127. Four ventilation openings 122, 122' regularly spaced along a lateral direction are formed through said functional front crosspiece 12, each ventilation opening 122, 122' having a generally square-shaped cross-section with generally rounded corners ("squircle"). The ventilation openings 122', which are close to the left and right ends 121, 123, are each partially bordered by a flexible member 34 of a corresponding energy absorption device 30. The cavity 345 of said flexible member 34 has a cross-section whose profile is partially complementary to the squircle profile of the ventilation opening 122' along a segment extending between an upper point 1221 and a lower point 1222.

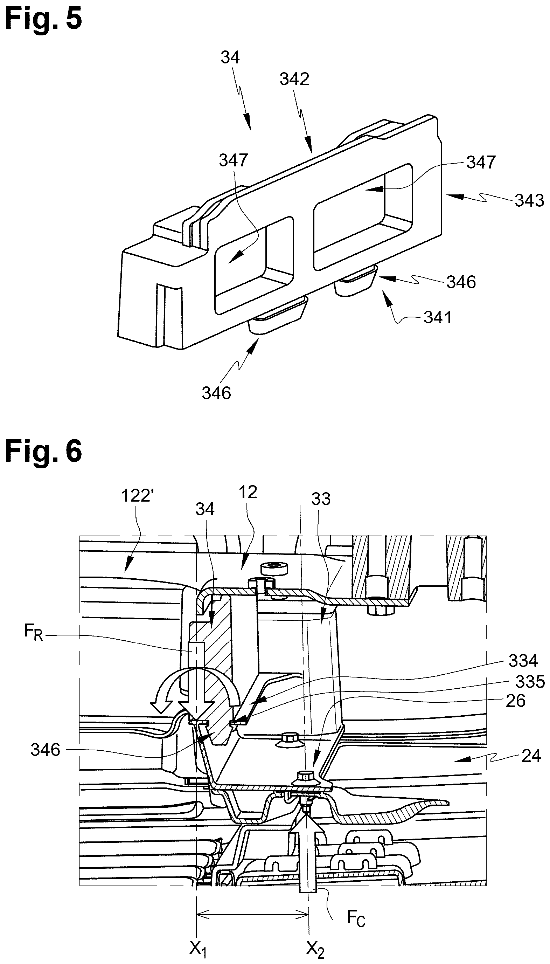

**FIG. 5** is a perspective view of the flexible member 34, which is illustrated in **FIG. 3****,** the flexible member 34 being oriented so as to make its first side face 343 visible. As shown, the flexible member 34 may advantageously be provided with connecting lugs 346 projecting towards the rear from the rear face 341 and with two cavities 347 formed inside the first side face 343. As illustrated in **FIG. 6****,** each connecting lug 346 may be slottingly engaged into a corresponding slot 335 formed in the rear leg 334 of the rigid structure 33 so as to secure the flexible member 34 to the rigid structure 33.

The flexible member 34 may advantageously be made of a compressible and deformable material. In particular, in a preferred embodiment of the present invention, the flexible member 34 is made of a foam material including an expandable polypropylene material.

Thus configured, and as illustrated in **FIG. 6****,** the flexible member 34 may perform a bending movement of the flexible member 34 relative to the rigid structure 33 about a longitudinal axis X1 that is aligned with a contact region between the flexible member 34 and the rear leg 334 of the rigid structure 33, parallel to the slot 335. This bending movement may occur when the rigid structure 33 is submitted to a compression force Fc applied by the front-end crosspiece 24 in the event of an impact with a pedestrian. The compression force Fc is applied at rivets 26 securing the rigid structure 33 to the front-end crosspiece 24 and is aligned with a longitudinal axis X2, which is laterally offset from the longitudinal axis X1. Accordingly, the compression force Fc induces a reaction force Fr of the flexible member 34 along the longitudinal axis X1 and a moment leading to the bending of the flexible member 34 about the longitudinal axis X1 (as illustrated by a curved arrow in **FIG. 6****).** This bending movement of the flexible member 34 is possible due to the use of a compressible and deformable material for forming said flexible member 34. This bending movement allows the energy absorption device 30 to absorb kinetic energy in the event of a collision with a pedestrian.

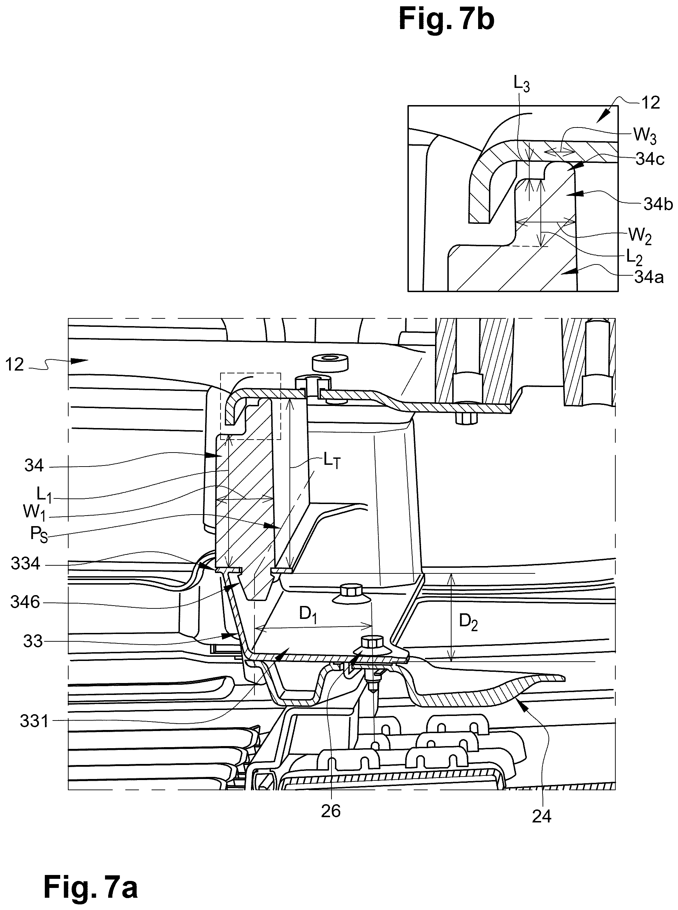

As illustrated in **FIG. 7a** and **FIG. 7b****,** the flexible member 34 is connected to the rigid structure 33 via a connecting lug 346 extending symmetrically about a plane of symmetry Ps. The plane of symmetry Ps is laterally distant from a rivet 26 securing the rigid structure 33 to the front-end crosspiece 24 by a distance D1. The rear panel 331 of the rigid structure 33 is longitudinally distant from the rear leg 334 thereof by a distant D2. The flexible member 34 has a stepped profile comprising three contiguous parallelepiped portions having different volumes, respectively a first portion 34a, a second portion 34b that is longitudinally contiguous to the first portion 34a, and a third portion 34c that is longitudinally contiguous to the second portion 34b and that contacts the functional front crosspiece 12, said third portion 34c forming the lip member illustrated in **FIG. 3****.** The volume of the first portion 34a is greater than the volume of the second portion 34b and the volume of the second portion 34b is greater than the volume of the third portion 34c. The lengths along a longitudinal direction and the widths along a lateral direction of the first, second and third portions 34a, 34b, 34c are respectively L1 and W1, L2 and W2, and L3 and W3. The sum of the lengths L1, L2 and L3 is equal to a length LT.

Those skilled in the art may envisage any combinations of lengths L1, L2, L3 and any widths W1, W2, W3 provided that this leads to sufficient compressibility for the flexible member 34. However, it has been found that specific combinations confer to the flexible member 34 both a higher bending ability and a better strength to meet durability requirements.

In particular, it has been found that better results are surprisingly achieved when the ratio between the width W1 and the length LT is less than 0.3, and/or when the ratio between the width W2 and the length LT is less than 0.15, and/or when the ratio between the length LT and the distance LT + D2 along a longitudinal direction between the functional front crosspiece 12 and the front-end crosspiece 24 is greater than 0.7. Furthermore, it has been found that better results are surprisingly achieved when the length L3 and the width W3 are each less than 6 mm.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An energy absorption device (30) intended to be disposed in a front portion of a vehicle (1) rearward of a front grille (22) thereof, the energy absorption device (30) comprising:
- a rigid structure (33) intended to be secured to the front grille (22) ;
- a flexible member (34) secured to the rigid structure (33) and intended to be disposed in front of a functional front crosspiece (12) of the vehicle (1).

2. The energy absorption device (30) of claim 1, wherein the flexible member (34) is made of a foam material including an expandable polypropylene material.

3. The energy absorption device (30) of claim 1 or 2, wherein the flexible member (34) is intended to be in contact with the functional front crosspiece (12) of the vehicle (1).

4. The energy absorption device (30) of claim 3, wherein the flexible member (34) is configured to form a seal between the functional front crosspiece (12) of the vehicle (1) and the front grille (22) thereof.

5. The energy absorption device (30) of claim 4, wherein the flexible member (34) is provided with a lip member (34c), which is intended to come in contact with the functional front crosspiece (12) and which is capable of locally deforming to form a tight seal that prevents a cooling air to circulate laterally.

6. The energy absorption device (30) of any of claims 3-5, wherein the flexible member (34) has an outer periphery that is intended to partially surround a ventilation opening (122') in the functional front crosspiece (12) of the vehicle (1).

7. The energy absorption device (30) of any of claims 1-6, wherein the flexible member (34) comprises at least one connecting lug (346) that is slottingly engaged into a corresponding slot (335) formed in the rigid structure (33), thus connecting the flexible member (34) to the rigid structure (33), said slot (335) extending along a connecting line that is laterally offset from a connecting element (26) securing the rigid structure (33) to the front grille (24) of the vehicle (1), thus allowing a bending movement of the flexible member (34) relative to the rigid structure (33) when a force (Fc) directed towards the rear of the vehicle (1) is applied on the connecting element (26).

8. The energy absorption device (30) of any of claims 1-7, wherein the flexible member (34) has a stepped profile comprising at least three parallelepiped portions (34a, 34b, 34c) having different volumes, respectively a first portion (34a) having a first volume, a second portion (34b) having a second volume, said second volume being lower than the first volume, and a third portion (34c) having a third volume, said third volume being lower than the second volume.

9. The energy absorption device (30) of claim 8, wherein the first portion (34a) has a first length (L1) along a longitudinal direction and a first width (W1) along a lateral direction, the second portion (34b) has a second length (L2) along a longitudinal direction and a second width (W2) along a lateral direction, and the third portion (34c) has a third length (L3) along a longitudinal direction and a third width (W3) along a lateral direction, said first, second and third lengths (L1, L2, L3) and widths (W1, W2, W3) being defined such that the ratio between the first width (W1) and the sum (LT) of the first, second and third lengths (L1, L2, L3) is less than 0.3.

10. The energy absorption device (30) of claim 8 or 9, wherein the first portion (34a) has a first length (L1) along a longitudinal direction and a first width (W1) along a lateral direction, the second portion (34b) has a second length (L2) along a longitudinal direction and a second width (W2) along a lateral direction, and the third portion (34c) has a third length (L3) along a longitudinal direction and a third width (W3) along a lateral direction, said first, second and third lengths (L1, L2, L3) and widths (W1, W2, W3) being defined such that the ratio between the second width (W2) and the sum (LT) of the first, second and third lengths (L1, L2, L3) is less than 0.15.

11. The energy absorption device (30) of any of claims 8-10, wherein the first portion (34a) has a first length (L1) along a longitudinal direction and a first width (W1) along a lateral direction, the second portion (34b) has a second length (L2) along a longitudinal direction and a second width (W2) along a lateral direction, and the third portion (34c) has a third length (L3) along a longitudinal direction and a third width (W3) along a lateral direction, said first, second and third lengths (L1, L2, L3) and widths (W1, W2, W3) being defined such that the ratio between the sum (LT) of the first, second and third lengths (L1, L2, L3) and the distance (LT+D2) along a longitudinal direction between the functional front crosspiece (12) of the vehicle (1) and the front grille (22) thereof is greater than 0.7.

12. A vehicle (1) comprising a functional front crosspiece (12), a front grille (22) and an energy absorption device (30) according to any of claims 1-11 disposed between the functional front crosspiece (12) and the front grille (22).
